# EUROPEAN PATENT APPLICATION

(11) **EP 3 714 953 A1**
(43) Date of publication of application: **30.09.2020**
(21) Application number: 18751662.0
(22) Date of filing: 02.02.2018
(51) Int. Cl.: A63F 3/06, A63F 13/00

(54) **INTERACTIVE GAMING SYSTEM AND METHOD FOR PLAYING A REMOTELY ACCESSIBLE INTERACTIVE GAME**

(30) Priority: 07.02.2017 EA 201700055
(71) Applicant: Silaev, Alexander Ivanovich, 6300 Zug (CH)
(72) Inventor: SILAEVA, Ekaterina Alexandrovna, Moscow 121170 (RU); SILAEV, Alexander Ivanovich, Moscow, 123104 (RU); SILAEV, Nikolay Alexandrovich, Moscow, 123104 (RU)
(86) International application number: PCT/EA2018/000001
(87) International publication number: WO 2018/145717

(57) **Abstract**

The claimed invention relates to a remotely accessible interactive game system. The game system comprises a terminal, a communications network and a server, comprising a memory unit, a timer, a payment unit, a combination generator, a winning logic unit, an encryption unit and a comparison unit. The invention provides an objective and unambiguous evaluation of the outcomes of a game by the organizer thereof and, at the same time, an increase in the number of players.

## Description

### FIELD OF THE INVENTION

The present invention relates to entertainment industry, to game systems and game methods that enable running of interactive games for remote users in telecommunication networks.

### BACKGROUND OF THE INVENTION

The use of the "Fair Game" lottery tickets provides for a game method which implies that all the lottery tickets taking part in the game contain a winning set of game symbols, while all the participants are able to check for all the winning symbols in their tickets (Russian Federation Patent No. 2224569, A63F3/06, 27.02.2004). The advantages of this method include a lower possibility to influence the course of the game by unscrupulous game organizers and game participants. However, the range of participants of the "Fair Game" lottery is limited to the region where the lottery tickets are distributed, which means that to receive the prize, the participant must provide the winning ticket to the game organizers whose credibility cannot be guaranteed. At the same time, the organizers of the game bear significant costs to cover the expense of developing and producing lottery tickets with multi-level protection against counterfeits and possible incorrect actions of the game participants, costs of logistics and examination of winning lottery tickets presented for payment, and costs of disputes settlement in case of incorrect actions with lottery tickets and / or lottery ticket damage during transportation to the place of examination or during the process of examination.

The closest prototype of the claimed invention is a game system with the functions of a known game method where the game organizer declares a category of items used in the upcoming game, while every item has a set of symbols enabling undoubtful identification of the item, with the symbols being split into three groups. At the same time the game participant who has one of the items, uses a game terminal and sends a signal containing information about the first group of symbols to the organizer via a communication channel when entering the game. Upon the participant's request, the organizer of the game sends to the terminal via a communication channel a signal containing information on the set of game symbols that establish the number of winning combinations that the game participant determines by comparing the set of game symbols with the second group of symbols. To confirm the amount of winnings the participant provides the organizer of the game with signals containing information of the first, second and third group of symbols through the communication channel.

The prototype's game method is implemented as a device that comprises an input-output processor adapted to connect to terminals via communication channels. The input-output processor is connected to an identification unit, a payment unit, a gaming symbol generator, a registration unit, as well as a set of units interconnected with an input-output processor: verification unit, a game account access unit and a help unit; a verification centre interconnected with a verification unit, and a memory unit interconnected with an identification unit, a payment unit, a registration unit, a verification unit, a game account access unit and a help unit. (Russian Federation Patent No. 2250124, A63F3/06, 20.04.2005).

The advantages of the prototype include the opportunity of conducting a probabilistic "fair" game on a computer network for remote users of network terminals that significantly reduces the costs of organizing and conducting the game compared to the use of the "Fair Game" lottery tickets. At the same time, the prototype limits the range of participants of the game to holders of items used in the game according to the organizers' purposes. A great number of categories of such items are limited to products with unique sets of symbols printed on them, which must be registered before starting the game and verified during the game in a game certification center independent of the organizers and participants. Besides, most of the declared categories of products with sets of symbols printed on them, in particular, product packaging and transport tickets, allow unscrupulous game participants to substitute items and manipulate the second and / or third group sets of symbols, which violates the principle of a "fair" game.

### SUMMARY OF THE INVENTION

The objective of the claimed invention is the creation of an interactive game system and an interactive game method, which make it technologically impossible for game organizer and the game participants to manipulate with the game information. The technical result of solving this problem is the objectivity and unambiguity of the assessment of the outcomes of the game made by its organizer and participants along with simultaneous increase in the number of participants of the game.
1. This technical result is achieved in a game system, including
   - a communication network providing message transmission with determination of the network addresses of the transmitter and the receiver;
   - at least one terminal with a memory unit and means for entering and displaying data and receiving and transmitting messages, connected to the communication network and through which at least one game participant engages in a dialogue with the system, in particular, before joining the game, the participant enters and stores in the memory unit a gaming combination and a game cost, when entering the game, participant sends a game participation request containing the game cost and information on the gaming combination to the game system;
   - a server connected to the network which:
      - by means of consistently interconnected an input-output processor, a query processor and a memory unit provides information on the rules of the game, including information about a game set of symbols and formats for making gaming and winning combinations out of the game set, and determining the game result- winning or not winning a prize - based on a comparison of the gaming and winning combinations according to the prize-winning rules, provides information on inquiries to the game system, payment means, game costs and prizes, registers users as game participants with unique identifiers;
      - by means of the input-output processor, the query processor, the memory unit as well as a timer and a payment unit interconnected with the query processor and the memory unit receives and identifies the game participation request sent from the terminal, performs payment operations for taking part in the game, stores the game participation request in the memory unit, forms and transmits a message on payment for participation in the game to the terminal of the identified game participant;
      - generates a winning combination from the game set of symbols by means of a combination generator interconnected with the query processor and the memory unit and stores the winning combination in the memory unit;
      - by means of the input-output processor, transmits the winning combination via the communication network to the terminal, which determines a current game result using the winning logics unit, comparing the winning combination with the gaming combination according to the prize-winning rules stored in the terminal memory unit, displays the current game result, on game participant's command generates a prize request containing the gaming combination and sends it via communication network to the server;
      - by means of the input-output processor, the query processor and the memory unit receives and identifies the prize request;
      - by means of a comparison unit interconnected with the memory unit, compares the gaming combination contained in the prize request with information on the gaming combination stored in the memory unit as part of the game participation request of the identified game participant, in case of incompatibility of the compared data, sends an error message to the game participant's terminal, otherwise transfers the gaming combination to a winning logics unit interconnected with the query processor and the memory unit;
      - by means of the winning logics unit determines the final game result, comparing the gaming combination with the winning one stored in the server memory unit according to the prize-winning rules, by means of the query processor and the input-output processor generates and sends a message on the final game result and the prize won or not won via the communication network to the game participant's terminal;
      - when a prize is won, performs operations on paying out the prize to the game participant by means of the payment unit and the memory unit;
   wherein:
   a) the server and the terminal comprise encryption units interconnected with the memory units and performing identical data encryption processes, the server encryption unit is interconnected with the comparison unit;
   b) before entering the game, the game participant enters a secret text into the terminal, the terminal generates a secret code with the gaming combination and the secret text, encrypts the secret code by means of its encryption unit thus receiving an open code, stores the secret and open codes in the memory unit and transmits the open code via the communication network to the server as a request for code uniqueness verification, the server by means of the query processor and the memory unit checks the open code for uniqueness in a list of secret and open codes pairs, in case of the identical open code in the list generates a message with a negative result of the code uniqueness verification and a proposal to change the secret code and sends the message to the terminal via the communication network through the query processor and the input-output processor, in case of absence of the identical open code in the list generates and sends to the terminal via the communication network a message with a positive result of the code uniqueness verification as well as a proposal to enter the game, the terminal displays the message received and stores the check result in the memory unit;
   c) having received the proposal to change the secret code, the game participant enters a new gaming combination and /or a new secret text into the terminal, which generates a new secret code and encrypts it by means of the encryption unit, thus receiving an open code, stores the secret and open codes in the memory unit, sends the open code via communication network to the server as a part of the request for checking code uniqueness, receives and displays the server message with the result of the code check;
   d) the terminal includes the open code in the game participation request as the information on the gaming combination;
   e) the terminal includes the secret code and the result of the code uniqueness verification in the prize request;
   f) the server by means of the query processor identifies the result of the code uniqueness verification and the secret code in the prize request, by means of the encryption unit encrypts the secret code, by means of the comparison unit compares the result of the secret code encryption with the open code stored in the server's memory unit in the game participation request of the identified game participant, transmits an error message to the terminal in case of mismatched compared data, otherwise by means of the query processor extracts the gaming combination from the secret code and transmits it to the winning logic unit, in case of the positive result of the code uniqueness verification stores the secret and open codes in the server memory unit in the list of secret and open codes pairs.

The game system described above is referred to as the basis system.

This technical result is also achieved in a variation of the basis system, in which:
- the Internet is used as the communication network;
- as the server, a computer server is used, in which the input-output processor is implemented by a website, the query processor, the encryption unit, the payment unit, the combination generator, the winning logic unit and the comparison unit are implemented by means of software applications, the memory unit is implemented by means of computer memory and database management system;
- a personal computer or a mobile device is used as the terminal, the terminal's functionality is implemented by means of a web browser or software application.

This technical result is also achieved in the basis system modification with the provisional name "Game system via SMS/USSD", in which:
- the Internet and SMS channels or USSD messaging channels in cellular networks are used as the communication network;
- the terminal functionality is implemented by means of a software application of a personal computer or mobile device connected to the Internet and SMS channels or USSD messaging channels in cellular networks;
- the server input-output processor contains an SMS gateway or USSD gateway;
- the software application disconnects the terminal from the Internet for the period from entering the secret code into the terminal to transmitting the prize request to the server;
- the terminal transmits to the server the request for code uniqueness verification and the game participation request and receives server responses to these requests via SMS channels or USSD messaging channels in cellular networks.

This technical result is also achieved in the basis system modification with the provisional name "Multisystem with One Winning Combination", in which:
- during a specified time period for taking part in the game, participants send game participation requests from the terminals to the server via the communication network;
- at the end of the time period for taking part in the game, the server generates a winning combination by means of the combination generator, stores the winning combination in the memory unit, publishes the winning combination in the communication network and transfers the winning combination to the game participants' terminals;
- during a specified time period for issuing prizes, the game participants determine the current game results in the terminals, comparing by terminal winning logic units the published winning combination with the gaming combinations stored in terminal memory units according to the prize-winning rules, and send the prize requests from the terminals to the server.

This technical result is also achieved in the basis system modification with the provisional name "Iterative Mono System", in which:
- the game participant sends successive game participation requests, containing the same and/or different open codes, from the terminal to the server via the communication network;
- having received another game participation request (starting with the first one), the server generates another winning combination by means of the combination generator, stores it in the memory unit together with the respective game participation request and sends the winning combination to the participant's terminal through the input-output processor via the communication network;
- the terminal by means of the winning logic unit determines another current game result, comparing the another winning combination (starting with the first one) with the sent gaming combination stored in the terminal memory unit according to the prize-winning rules, forms, stores in the memory unit and displays a list of current game results and prizes won;
- on completing participation in the game after transmitting N game participation requests to the server, the participant sends to the server a prize request, in which the terminal includes N secret codes corresponding to the N open codes sent to the server in the N game participation requests;
- the server by means of the query processor sequentially extracts the secret codes from the prize request, starting with the first secret code, by means of the encryption unit encrypts each secret code, by means of the comparison unit compares the result of the encryption with the open code stored in the memory unit in the corresponding game participation request, by means of the memory unit enters an error to a list of final game results and prizes won in case of unidentical compared data, but in case of identical compared data by means of the query processor extracts the gaming combination from the secret code, by means of the winning logic unit determines the final game result comparing this gaming combination according to the prize-winning rules with the corresponding winning combination stored in the memory unit and sent to the game participant's terminal, by means of the memory unit enters the final game result into the list of final game results and prizes won, upon completion of the N secret codes processing, sends a message with the list of final game results and prizes won to the game participant's terminal through input-output processor, by means of the payment unit performs prize issuing operations, by means of the memory unit updates the list of secret and open codes pairs.

This technical result is also achieved in a variation of the basis system modification "Iterative Mono System", in which having saved the first secret code in the memory unit, the terminal generates the next secret code by joining the next gaming combination to the previous secret code.

This technical result is also achieved in a variation of the basis system, in which:
- the game set consists of all n-bit integers from the interval [0...0; 10ⁿ-1];
- the terminal provides input of any n-bit integer from the interval [0...0; 10ⁿ-1] as the gaming combination;
- the combination generator generates the winning combination by randomly selecting an n-bit integer from the interval [0...0; 10ⁿ-1];
- the winning logic unit determines the prize winning when the digits in the corresponding bits of the gaming and winning combinations coincide or when the difference between the gaming and winning combinations does not exceed a specified limit.

This technical result is also achieved in a variation of the basis system, in which:
- the game set consists of all integers from the interval [1; N];
- the terminal provides input of the gaming combination of M integers without repetition selected by the game participant from the interval [1; N];
- the combination generator generates the winning combination by randomly selecting M numbers without repetition from the interval [1; N];
- the winning logic unit determines the prize by the rules of the well-known lottery "M out of N" or by the rules of the well-known "Fair Game" lottery ticket.

This technical result is also achieved in a variation of the basis system with the provisional name "Fair Slots System", in which:
- the game set consists of J elements - graphic symbols with identifiers printed on K end faces of each of the L reels of the virtual slot machine, which the terminal displays with an LxM matrix of L columns with graphic symbols placed on M adjacent faces of each reel (J>2, K>=J, 2<L<7, 0<M<6);
- the game participant indicates one graphic symbol on each reel in the terminal, the terminal by means of its memory unit converts these indications into the gaming combination of L identifiers of the elements of the game set;
- by means of the combination generator, the server models the rotation and stopping of the reels and puts the identifiers of elements on the M adjacent faces of each of the L stopped reels into the LxM matrix, according to the rules of the well-known game "Slots" determines the winning combinations of identifiers in the matrix, stores the winning combinations in the memory unit and using the input-output processor transmits the LxM matrix of identifiers and the winning combinations to the terminal via the communication network;
- the terminal displays the matrix of identifiers and the winning combinations with appropriate graphic symbols, by means of the winning logic unit determines the current game result, comparing the gaming combination stored in the terminal memory unit with each of the winning combinations according to the rules of the well-known game "Slots";
- by means of the winning logic unit the server determines a final game result by comparing the gaming combination with each of the winning combinations stored in the server's memory unit according to the prize-winning rules of the well-known game "Slots".

This technical result is also achieved in a modification of the "Fair Slots System" variation of the basis system, in which:
- the game set contains an element with Null identifier, which presence in the identifier matrix cancels the winnings, and an element with #777 identifier, which presence in the identifier matrix is treated according to special prize-winning rules, the terminal provides input of any element of the game set as the value of Null identifier and any element of the game set as the value of #777 identifier into the secret text;
- the game participant indicates two elements in the game set, whose X and Y identifiers the terminal includes into the secret text as the values of Null and #777 identifiers respectively;
- the terminal memory unit transmits X and Y values of Null and # 777 identifiers to the terminal's winning logic unit;
- the query processor extracts X and Y values of Null and #777 identifiers from the prize request and transmits these values to the server winning logic unit;
- terminal and server winning logic units treat X identifier in the matrix of identifiers as Null identifier, treat Null identifier as X identifier, treat Y identifier as # 777 identifier, treat # 777 identifier as Y identifier.

This technical result is also achieved in a variation of the basis system with the provisional name "Fair Roulette System", in which:
- the game set consists of 37 numbers - all integers from the interval [0; 36];
- before the game starts, the terminal displays the game table of the well-known "Roulette" game containing all numbers from 0 to 36 inclusive, the game participant indicates in the terminal some elements of the game table intended for betting and assigns bet values to these elements, the terminal converts these values into the gaming combination in the form of the first ordered set of values, each of which is equal to the bet value for each number, including null bets, and the second ordered set of values, each of which is equal to the bet value for every other element of the game table, intended for betting, including null bets;
- the terminal generates and displays the sum of the values of the gaming combination and includes it in the game participation request as the game cost;
- the combination generator generates the winning combination by randomly selecting an integer from the interval [0; 36];
- the winning logic unit determines the game result according to the prize-winning rules of the well-known "Roulette" game.

This technical result is also achieved in a modification of the "Fair Roulette System" variation of the basis system, in which:
- the terminal provides input of any integer from the interval [0; 36] as a value of Zero identifier into the secret text;
- the game participant chooses from the game set a number X and includes it into the secret text as the value X of Zero identifier;
- the terminal memory unit transmits the value X of Zero identifier to the terminal winning logic unit;
- the query processor extracts the value X of Zero identifier from the prize request and transmits the value X to the server winning logic unit;
- the terminal and server winning logic units process the winning combination X as number 0 in the well-known game "Roulette", process the winning combination 0 as number X in the well-known game "Roulette".

This technical result is also achieved in a variation of the basis system with the provisional name "Fair Cards System", in which:
- the game set consists of identifiers of N playing cards, each of which correlates with identifiers of card attributes, denoting the denomination, number or letter, suit and colour in terminal and server memory units and winning logic units;
- before the start of the game, the terminal displays N cards and the attributes and combinations of card attributes intended for betting, the game participant indicates some cards and/or card attributes and/or combinations of card attributes and assigns bet values to indicated cards and/or card attributes and/or combinations of card attributes, the terminal memory unit converts these indications and bet values into the gaming combination that consists of identifiers of the specified cards and/or identifiers of the specified card attributes and/or identifiers of the specified combinations of card attributes in pairs with given bet values placed on these cards and/or attributes and/or combinations of card attributes;
- the terminal calculates and includes the sum of the bet values of the gaming combination in the game participation request as the game cost;
- the combination generator generates the winning combination by randomly selecting an X identifier from the game set;
- the terminal and server winning logic units determine the prize when identifier X, or at least one attribute identifier correlated with identifier X, or at least one combination of attribute identifiers correlated with identifier X matches at least with one identifier or one identifier combination in the gaming combination.

This technical result is also achieved in a modification of the "Fair Card System" variation of the basis system, in which:
- the game set contains N identifiers of playing cards and an identifier Joker of an empty card to which no attribute corresponds;
- the terminal provides input of any identifier from the game set into the secret text as the value of identifier Joker;
- the game participant includes an identifier Y from the game set in the secret text as the value Y of identifier Joker;
- the terminal memory unit transmits the value Y of identifier Joker to the terminal winning logic unit;
- the query processor extracts the value Y of identifier Joker from the prize request and transmits it to the server winning logic unit;
- the terminal and server winning logic units recognize the Y winning combination as the Joker winning combination, recognize the Joker winning combination as the Y winning combination.

This technical result is also achieved in a modification of the basis system in which the server contains an advertisement unit interconnected with the timer, the query processor and the payment unit, said advertisement unit in response to the game participation request sends an advertisement file through the query processor and the input-output processor to the game participant's terminal, the time of displaying the advertisement file is determined by the game cost, the terminal displays the advertisement file and, at the end of the time of displaying the advertisement file, receives the winning combination from the server.

This technical result is achieved in a game method, which involves:
- specifying the game set of symbols and formats for generating gaming and winning combinations out of them;
- specifying the means of payment, game costs and prizes, options for determining the game result (winning or not winning a prize) by comparing the gaming and winning combinations according to prize-winning rules;
- providing access to information on the rules of the game, means of payment, prices for participation in the game and prizes;
- registration of a game participant with assignment of a unique identifier;
- generating a gaming combination by the game participant and transmitting via communication channels a message with a game participation request, containing the game participant's identifier, the game cost and information on the gaming combination;
- identifying the game participation request, performing game participation payment operations, transmitting a message on game participation payment to the game participant, saving the game participation request in the memory;
- generating a winning combination and transmitting a message with the winning combination to the game participant via communication channels;
- determining a current game result by the game participant by comparing the gaming and winning combinations according to the prize-winning rules;
- transmitting by the game participant a message with a prize request containing the game participant's identifier and the gaming combination via communication channels;
- identifying the prize request, comparing the gaming combination from the prize request with information about the gaming combination stored in the memory in the game participation request of the identified game participant, transmitting an error message via communication channels to the game participant in case the compared data does not match, otherwise determining the final game result by comparing the gaming and winning combinations according to the prize-winning rules, transmitting a message about the final game result, including information about winning or not winning a prize to the game participant via communication channels, performing operations to provide the game participant with the prize won;
   in which:
   - in the game rules, a format of secret text, a format of secret code and a method of data encryption are set;
   - before entering the game, the game participant sets a secret text, generates a secret code consisting of the gaming combination and the secret text, transforms the secret code into an open code by using the data encryption, stores the secret and open codes in memory, transmits the open code via communication channels in a message with a code uniqueness verification request;
   - the open code is verified for uniqueness using a list of secret and open code pairs, if there is an identical open code in the list, then a message with negative result of the code uniqueness verification proposing to change the secret code is transmitted to the game participant, if there is no identical open code in the list, then a message with positive result of the code uniqueness verification proposing to enter the game is transmitted to the game participant;
   - having decided to change the secret code, the game participant changes the gaming combination and/or the secret text, converts the respectively changed secret code into the open code by using the data encryption, stores the secret and open codes in memory, transmits the open code via communication channels in the message with the code uniqueness verification request and receives in response the message with the result of code uniqueness verification;
   - when entering the game, the game participant transmits via communication channels a message with the game participation request, that includes the open code as the information about the gaming combination;
   - when completing the game, the game participant transmits via communication channels a message with the prize request which includes the secret code and the result of the code uniqueness verification;
   - the secret code from the identified prize request is encrypted, the result of the encryption is compared with the open code from the game participation request of the identified game participant, in case of mismatch of the compared data, an error message is transmitted to the game participant, otherwise the game result is determined by comparing the gaming combination in the secret code with the winning combination according to the prize-winning rules, in case of the positive result of the code uniqueness verification the secret and open codes are stored in the list of secret and open code pairs.

The said game method is called below the basis method.

The described technical result is also achieved in the modification of the basis method with the provisional name "Multi-Game with one winning combination", in which:
- during a specified time period for participation in the game, the game participants transmit via communication channels messages with game participation requests;
- at the end of the specified time period for participation in the game, winning combination is formed and published;
- during a specified time period for issuing the prizes, the game participants determine their current game results, comparing the published winning combination with their own gaming combinations according to the prize-winning rules, and send messages with prize requests via communication channels.

This technical result is also achieved in the modification of the basis method with the provisional name "Iterative Mono Game", in which:
- the game participant transmits via communication channels successive game participation requests, containing the same and/or different open codes;
- in response to another game participation request, another winning combination is formed, the winning combination is stored in memory along with the game participation request and its serial number in the game, then the winning combination is transmitted to the game participant via communication channels;
- the game participant sequentially determines the current game result, comparing the current winning combination with the current gaming combination according to the prize-winning rules, and forms a list of current game results and prizes won;
- on completing the game after N game participation requests, the game participant transmits via communication channels a prize request message along with a sequence of N secret codes corresponding to N open codes sent in N game participation requests;
- each secret code is extracted from the prize request starting with the first secret code, this secret code is encrypted, the result of encryption is compared with the open code that had earlier been stored in corresponding game participation request, in case the compared data are not identical, an error is recorded into a list of final game results and prizes won, in case of identical data, the gaming combination is extracted from the secret code, the game result is determined according to the prize-winning rules by comparing this gaming combination with the corresponding winning combination stored in the memory and transmitted to the game participant, this game result is added to the list of final game results and prizes won, after N secret codes have been processed in this way, a message is transmitted via communication channels to the game participant with the list of final game results and prizes won, then the prizes won are issued.

This technical result is also achieved in a variation of the modification "Iterative Mono Game" of the basis method, in which, keeping the first secret code in memory, the game participant generates each next secret code by joining the next gaming combination to the previous secret code.

This technical result is also achieved in a variation of the basis method, in which:
- the game set contains all n-bit integers from the interval [0...0; 10ⁿ-1];
- the game participant chooses an n-bit number from the interval [0...0; 10ⁿ-1] as a gaming combination;
- the winning combination is generated by random selection of an n-bit number from the interval [0...0; 10ⁿ-1];
- the prize-winning rules determine the winnings when the digits in the corresponding bits of the gaming and the winning combinations coincide or when the difference between the gaming and the winning combinations does not exceed a specified limit.

This technical result is also achieved in a variation of the basis method, in which:
- the game set contains all integers from the interval [1; N];
- the game participant chooses M integers without repetitions from the interval [1; N] as a gaming combination;
- the winning combination is generated by randomly choosing M integers without repetitions from the interval [1; N];
- the prize-winning rules are determined by the rules of the well-known lottery "M out of N" or by the rules of the well-known "Fair Game" lottery ticket.

This technical result is also achieved in a variation of the basis method with the provisional name "Fair Slots Game", in which:
- the game set consists of J elements - graphic symbols with identifiers carried on K end faces of each of L reels of the virtual slot machine, which displays an LxM matrix with L columns with graphic symbols located on M adjacent faces of each reel (J>2, K>=J, 2<L<7, 0<M<6);
- the prize-winning rules are determined by the rules of the well-known "Slots" game;
- the game participant makes an ordered set of L elements of the game set and generates the gaming combination from the identifiers of these elements;
- on receiving the game participation request, the rotation and stopping of the slot machine reels is modelled, the identifiers of the elements on the M adjacent faces of each of the L stopped reels are recorded into the LxM matrix with L columns and M rows, the winning combinations of identifiers in this matrix are determined by the rules of the "Slots" game, the winning combinations are stored in memory, the LxM matrix of identifiers along with the winning combinations are transmitted via communication channels to the game participant;
- the game participant determines the current game result according to the prize-winning rules by comparing the gaming combination with each of the winning combinations received via communication channels;
- the final game result is determined by comparing the gaming combination with each of the winning combinations stored in memory according to the prize-winning rules.

This technical result is also achieved in a modification of the "Fair Slots Game" variety of the basis method, in which:
- the game set contains an element with Null identifier and an element with #777 identifier, presence of Null identifier in the identifier matrix cancels the winnings, presence of #777 identifier in the identifier matrix is treated according to special prize-winning rules;
- the secret text format contains input fields for values of Null and #777 identifiers;
- the game participant includes X and Y identifiers of arbitrary elements of the game set as the values of Null and #777 identifiers in the secret text;
- when determining the current and final results of the game, the presence of X identifier in the matrix of identifiers is treated as Null identifier, the presence of Null identifier is treated as X identifier, the presence of Y identifier is treated as #777 identifier, the presence of #777 identifier is treated as Y identifier.

This technical result is also achieved in a variation of the basis method with the provisional name "Fair Roulette Game", in which:
- the game set consists of 37 numbers - integers from the interval [0; 36], located on the gaming table of the well-known "Roulette" game;
- the game participant forms the gaming combination as the first ordered set of values, each of which is equal to a bet value placed on each number on the "Roulette" game table, including null bets, and the second ordered set of values, each of which is equal to a bet value placed on each other element intended for betting on the "Roulette" game table, including null bets;

- the game participant calculates the sum of the values of the gaming combination as the price of the participation in the game and includes it in the game participation request;
- the winning combination is generated by random selection of an integer from the interval [0; 36];
- the game result is determined by prize-wining rules of the well-known "Roulette" game.

This technical result is also achieved in a modification of the "Fair Roulette Game" variation of the basis method, in which:
- the secret text format includes a value field for Zero identifier;
- the game participant chooses a number X from the game set and enters it into the value field for Zero identifier;
- when determining the game result, the winning combination X is treated as number 0 in the "Roulette" game, the winning combination 0 is treated as number X.

This technical result is also achieved in a variation of the basis method with the provisional name "Fair Cards Game", in which:
- the game set consists of N playing cards, each of which has an identifier and attributes of the card correlated with the identifier - nominal value, number or letter, suit, colour;
- the gaming combination consists of double fields, one field is designed for a card identifier, or a card attribute identifier, or a combination of card attribute identifiers, other field is designed for a bet placed on the card identifier, or the card attribute identifier, or the combination of card attribute identifiers respectively;
- the game participant sets the gaming combination as one or several card identifiers, and/or one or several card attribute identifiers, and/or one or several card attribute identifiers combinations with indications of bet values for these identifiers and/or identifier combinations;
- the game participant calculates the sum of bet values of the gaming combination as the game cost and includes it into the game participation request;
- the winning combination is generated by random selection of a card from the game set and setting its identifier X as the winning combination;
- the prize winning is determined by matching the X identifier, or at least one attribute identifier correlated with X identifier, or at least one combination of attribute identifiers correlated with X identifier, at least with an identifier or a combination of identifiers in the gaming combination.

This technical result is also achieved in a modification of the "Fair Cards Game" variety of the basis method, in which:
- the game set contains an empty card with Joker identifier, which is not correlated with any attribute and treated as a winning combination by special prize-winning rules;
- the secret text format includes a value field for the empty card identifier;
- the game participant chooses a card from the game set and enters its identifier Y in the value field for the empty card identifier of the secret text;
- when choosing the empty card from the game set, the Joker identifier is assigned to it as the respective winning combination;
- when determining the game result, the Joker winning combination is replaced with Y, the Y winning combination is replaced with Joker.

This technical result is also achieved in a variation of the basis method of the game, in which the time of watching ads is used as means of payment for participation in the game, in response to the game participation request a file with ad is sent via communication channels and displayed to the game participant, the duration of advertisement is determined by the game cost, nominated in seconds of time for watching ads, the winning combination is transmitted to the participant via communication channels when the time of watching ad ends.

### BRIEF DESCRIPTION OF THE DRAWINGS

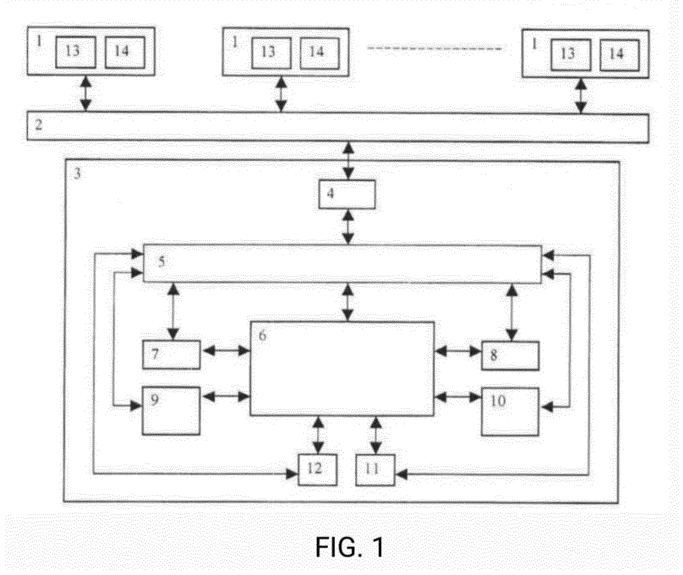

FIG. 1 represents a functional flow chart of the claimed interactive game system.

### EMBODIMENTS OF THE INVENTION

In the following description of the game system and game method when characterizing functional units, elements and devises and in the description of their operation, use is made of highly specialized terms which are due to application tasks to be carried out by them. Meanwhile auxiliary, general-system and service tasks (conversion of data formats and commands, communications protocols, memory addressing, generation of system messages and commands, etc.) are only noted as needed to define more exactly functions of certain application tasks. It should be noted that the invention is not limited to the scope of accepted terminology, as each term used encompasses all equivalent elements, functional units and devices operated in a similar way and used to perform the same functions.

The functional flow chart of the claimed game system presented in FIG. 1 contains at least one terminal (1) with a memory unit interconnected through a communication network (2) with a server (3), which is connected to the communication network (2) through an input-output processor (4) and contains a query processor (5) interconnected with said input-output processor (4), said query processor (5) is connected to a memory unit (6), said server also contains a timer (7), a payment unit (8), a combinations generator (9) and a winning logic unit (10) all connected to the query processor (5) and memory unit (6), the query processor (5) and the memory unit (6) are interconnected with an encryption unit (11) and a comparison unit (12), the terminal (1) contains the encryption unit (13) and the winning logic unit (14).

The claimed game system is based on the client-server network architecture principles, where the terminals (1) serve as clients, the messaging network serves as the communication network (2), the game server serves as the server (3). On the architectural level, the operation of the system represents the process of exchanging messages via the communication network (2) between terminals (1) and the server (3).

Terminal (1) is designed for input, display, conversion, storage and encryption of the raw data, as well as for generation, processing, storage and transmission of messages via the communication network (2) to the server (3), and for receiving, processing, storage and display of server messages along with analysis and display of the game results.

Terminal functions are performed by personal computers and mobile devices (tablets, smartphones) with sufficient memory, standard data entry and display, reception and transmission of messages over the Internet, in which terminal functionality, including the functionality of the encryption unit (13) and the winning logic unit (14) implemented by means of managed dynamic web pages of standard web browsers or in a software application program - a mobile app for mobile devices.

The communication network (2) is designed to exchange messages between terminals and the server with the determination of the network addresses of the transmitter and the receiver. The Internet is used as a communication network.

The server (3) is designed to perform both well-known functions of the game server, for example, of a prototype server (providing access to information on game rules, prizes, message formats, registration of game participants and management of their game accounts; paying for participation in games; receiving, identification and storage of messages, recognition of game participation requests and prize requests; generating and transmitting messages to terminals; collection and publication of statistical and reference data). It is also designed for specific functions of the claimed game system - interaction of the query processor (5) and the memory unit (6) with the encryption unit (11) and the comparison unit (12).

The server (3) is made on the basis of a computer server with an input-output processor (4), a central processor, memory, a database management system and a website, which, along with the operating system and timer (7), perform functions of the query processor (5), memory unit (6), payment unit (8), combinations generator (9), winning logic unit (10), encryption unit (11), comparison unit (12) on the level of application software programs.

The input-output processor (4) is designed to receive and transmit messages via communication networks by the server. Its functionality is implemented through the server-side website and standard hardware and software interfaces for connecting the server to the Internet.

The query processor (5) is designed to recognize and dispatch messages received via the network and to generate server messages for transmitting to recipients via the network. The query processor is implemented through an application program in the server's computer memory.

The memory unit (6) is designed for registering, editing, searching and storing accounts of the game participants, as well as replenishing, searching and storing the list of pairs of unique codes that have been already used in the game - {open code, secret code}. The game participant's account contains his/her identified data, data on gaming activity, including game participation requests, winning combinations, prize requests, final game results, data on the history of changes in the balance of the game funds. The functional of the memory unit is performed by means of a database in the long-term memory of the server and the database management system.

The timer (7) is designed to record in the game participant's account the times of receiving the requests for changing the balance on the game account, including game participation requests, prize requests, requests for refilling the game account from external payment systems, requests for transferring funds from game account to external systems. The timer functionality is performed by a standard timer of the computer server.

The payment unit (8) is designed to add funds to the game participant's account by payments from external payment systems, to transfer funds from the game account to external systems, to pay for participation in the game from the game account and to transfer the prizes won to the game account. The payment unit is implemented by means of an application software program in the server computer memory and by standard means of interconnecting external payment systems with the websites of network service providers.

The combination generator (9) is designed to form winning combinations from the game set symbols. The combination generator is implemented in the server computer memory by means of an application program utilizing standard random number generation tools when the rules of the game require the generation of random combinations.

Winning logic units (10), (14) are designed to determine the game result- winning or not winning the prize - by comparing the gaming and winning combinations according to the prize-winning rules and the rules for determining the prize values won. The winning logic units (10), (14) are implemented by means of an application program in the server computer memory and the terminal, respectively.

The encryption units (11), (13) are designed to encrypt a secret code and form an open code as a result of the encryption. The encryption units (11), (13) are implemented by means of an application program in the server computer memory and the terminal, respectively.

The comparison unit (12) is designed to verify the identity of two open codes and is implemented by means of an application program in the server computer memory.

Before and during the game, the organizer distributes the information about the rules of the game among communication network users through the server's website and other methods. The information about the rules of the game includes: a game symbols set, formats for generating (from the game symbols set) gaming combinations by game participants and winning combinations by the server on behalf of the game organizer; a secret code format set by the game participant including the gaming combination and a secret text; a method of encrypting the secret code into an open code; virtual and / or real funds used in the game; participation prices; rules for determining the game result- winning or not winning the prize-based on a comparison of the gaming and winning combinations according to the prize-winnings rules with indicating the prize table or formula determining the prize won (including zero prize) depending on degrees of matching of the combinations compared.

In a particular case, in the claimed varieties of the basis system and the basis method for implementing an interactive integer n-digit number guessing game, the game symbols set is the set of all n-bit integers from the interval [0...0; 10ⁿ-1], the gaming and the winning combinations are the gaming number and the winning number, respectively, the formats of which are the same and consist of n Arabic digits, the secret code is the gaming number, supplemented with a secret text of at least Q characters (for example, Q> n + 3) to the left or right of the gaming number. An example of the secret code in a three-digit guessing game (n = 3) is the text line 007-James Bond comprised of the gaming number 007 and the secret text "-James Bond" (Q=11). The game organizer can set different prize-winning rules depending on the definition of winning matches when comparing the gaming and winning numbers, for example:
A) the match is treated as a winning one in case the numbers coincide in one or more corresponding digits of the numbers compared;
B) the match is treated as a winning one in case the modulus of the difference d of the numbers compared does not exceed a given limit D, i.e. when d <= D;
C) the match is treated as a winning one if the numbers match in the most significant digit, as well as in several consecutive digits of the numbers compared from left to right, starting with the most significant digit.
In other case, for implementing an interactive game like the well-known lottery "M out of N" in the claimed varieties of the basis system and the basis method it is required to guess M numbers from the set of all integers from 1 to N. The game symbols set is the set of all integers from 1 to N, while the gaming and winning combinations have similar format and represent samples of M numbers of the game set. In this case, the prize-winning rules are determined by the rules of "M out of N" lottery. The secret code is a text line containing the numbers of the gaming combination as well as the secret text of at least Q characters (for example, Q> 6). This game includes, for example, the Euro Million lottery (see www.EuroMillion.com), in which N = 50, M = 5, i.e. Euro Million is a "5 out of 50" lottery.

This case is also implemented in the "Fair Game" lottery ticket (see Russian Patent No. 2224569, A63F3 / 06, 27.02.2004), which requires guessing the location of M winning elements in a matrix of JxK dimensions, containing M winning elements and N-M other elements, where N=J^{∗}K. Indeed, having renumbered all the elements of the matrix with numbers from 1 to N, we get a game set of all integers from the interval [1; N], from which it is needed to guess M winning numbers to win a prize according to the rules of the "Fair Game" lottery ticket.

In other particular case, in the claimed "Fair Slots System" and "Fair Slots Game" variations of the basis system and method for implementation of an interactive game like the "Slots" (see the Golden Encyclopaedia of Gambling, Comp. N.H. KL Vatchenko, Baro-press, 1999), the game set consists of J identifiers of graphic symbols carried on the end faces of the K-sector slot machine virtual reel. The gaming and the winning combinations have the same format, but one gaming combination corresponds to N winning combinations. Here, the gaming combination is a line of L identifiers, where L is the number of reels in the slot machine. The winning combinations contain L identifiers and are determined according to the rules of the Slots game using N winning lines in LxM matrix of L columns and M rows with graphic symbols on M adjacent faces of each of the L reels on the slot machine screen. The J, K, L, M, N parameters of the slot machine are fixed. Usually the number of game symbols J belongs to the interval [3; 38], the symbols on the reel can be repeated, so K>=J, the number of columns (i.e. the number of reels) in the matrix is L=3-6, the number of lines in the matrix is M = 3-5, the number of winning lines is N=3-9. The prize-winning rules are determined by the rules of Slots game. The secret code is a text line containing L identifiers and the secret text contains at least Q text characters (for example, Q> 6).

In the claimed modifications of the "Fair Slots System" and "Fair Slots Game" variations of the basis system and method, the game set contains an element with Null identifier, whose graphic symbol displayed on the slot machine screen as a result of its stopping (just as in the "Slots" game), leads to the cancellation of winning combinations. The game set also contains an element with #777 identifier whose graphic symbol displayed on the slot machine screen as a result of its stopping (just as in the "Slots" game), leads to the implementation of special prize-winning rules. In this regard, in these modifications, the secret text format includes special Null and #777 fields for redefining the Null and #777 identifiers of the game set to any non-matching X and Y identifiers of the game set.

In other particular case, the formats of the gaming and winning combinations do not match in the claimed "Fair Roulette System" and "Fair Roulette Game" variations of the basis system and method for implementation of an interactive game like the "Roulette" (see Golden Encyclopaedia of Gambling / Comp. N.V. Khatkina, KL Vatchenko, Bar-Press, 1999). Here the game set is the set of numbers from 0 to 36 inclusive located on the Roulette game table. The winning combination is an integer from the interval [0; 36], the gaming combination is two ordered sets of numbers. In the first set of 37 numbers, each number is equal to the bet placed on the corresponding number on the gaming table, including null bets. For example, an ordered set of numbers
{000005000050000500005000050000500005}
contains bets of 5 units on numbers that are multiples of 5, and null bets on other numbers. The second set of numbers contains bets (including null bets) on other elements of the Roulette game table, intended for placing bets, including bets:
- on "red", i.e. on any number from the set {1, 3, 5, 7, 9, 12, 14, 16, 18, 19, 21, 23, 25, 27, 30, 32, 34, 36};
- on "black", i.e. on any number from the set {2, 4, 6, 8, 10, 11, 13, 15, 17, 20, 22, 24, 26, 28, 29, 31, 33, 35};
- on any even number;
- on any odd number.
- on the "first half" i.e. on any number from the interval [1; 18];
- on the "second half' i.e. on any number from the interval [19; 36];
- on the "first dozen" i.e. on any number from the interval [1; 12];
- on the "second dozen", i.e. on any number from the interval [13; 24];
- on the "third dozen", i.e. on any number from the interval [26; 36];
- on pairs of numbers located in adjacent cells on the game table
- on three numbers located in the rows on the game table;
- on four numbers located in the adjoining cells on the game table;
- on numbers located in the columns on the game table.

In this case, the secret code is a gaming combination of the format described above, supplemented by the secret text of at least Q characters (for example, Q> 6), the cost of participation in the game is equal to the sum of all the values of the gaming combination, i.e. the sum of all bets, the prize-winning rules are determined by the rules of the "Roulette" game.

Due to special prize-winning rules for the winning number 0, in the claimed modifications of the "Fair Roulette System" and "Fair Roulette Game" variations of the basis system and method, the secret text format includes a Zero field to reset the number 0 by any X number of the game set.

In other case, in the claimed "Fair Cards System" and "Fair Cards Game" variations of the basis system and method for implementation of an interactive game like "Guess the Card" game (see Golden Encyclopaedia of Gambling. N.V. Hatkina , K.L. Vatchenko, Bar-Press, 1999), the formats of the gaming and the winning combinations do not match. Here one needs to guess a card from N playing cards (usually, N = 36 or N = 52), each of which has a unique identifier and attributes - a face value, a number or a letter, a suit, a colour. Each attribute has a unique attribute identifier. The game set consists of N playing cards identifiers, the winning combination is one of these identifiers. The gaming combination consists of card identifiers, and / or card attribute identifiers, and / or card attribute identifier combinations in pairs with bets on the corresponding cards, and / or attributes, and / or card attribute combinations. For example, the gaming combination {Six 1, RedQ 2, Letter 3, Black 4} contains a 1 -unit bet on a card with the number 6, a 2-units bet on a red queen, a 3-units bet on a card with a letter (jack, queen, king, ace) and 4-units bet on a black card. The prize-winning rules are determined by the rules of the "Guess the Card" game. The secret text is the gaming combination, supplemented with a text of at least Q text characters (for example, Q> 6).

In the claimed modifications of the "Fair Cards System" and "Fair Cards Game" variations of the basis system and method, the game set, besides playing cards, contains an empty card - a card without attributes but with the Joker identifier, which is treated as the winning combination according to special prize-winning rules. For example, it means losing all bets placed on attributes and card attribute combinations. Here the format of the secret text includes a special field Joker to redefine the Joker identifier to Y identifier of any playing card.

To take part in the game, a user of telecommunication network (2) registers in the standard way from her/his terminal (1) on the server (3) as a game participant, while the server generates an account with a unique identifier of this game participant in server memory unit (6). When performing the terminal functions via a web browser, the server in one-to-one mode links the game participant identifier with a unique username and password set by the user. When performing the terminal functions via a mobile application, the server in one-to-one mode links the identifier of the game participant with the identification code of the mobile device.

Having logged into server's website using the identification code of the mobile device when launching the mobile app or via the web browser using a user's login and password, the game participant gets remote access to her/his account in the server's memory unit (6). Using the payment unit (8) the participant adds game funds to her/his game account by means of a standard payment method and enters into the terminal (3) a secret code which includes her/his gaming combination and secret text.

In the preferred embodiment of the invention, the game participant enters the elements of the gaming combination into the terminal through a graphical interface that displays the elements of the gaming combination and enables the participant to interact with these images using a computer mouse, touchpad or by tapping the touch screen.

In the claimed variation of the basis system for implementing the game of guessing an integer n-digit number, the game participant enters the gaming number by moving and setting digits in displayed digits of the gaming number. In the claimed variation of the basis system for implementing the games like "M out of N" and "Fair Game", the game participant enters a gaming combination, indicating M cells in the matrix displayed on the screen. The matrix contains consecutive numbers from 1 to N for the game "M out of N" as well as vertical and horizontal cells indices for the "Fair Game". In the claimed variation "Fair Slots System" of the basis system, the game participant using the terminal screen moves the images of the end faces of the virtual reels displayed in the matrix on the virtual slot machine screen, and indicates one graphic symbol in each of the L columns of the matrix, i.e. on each of the L reels. In the claimed variation "Fair Roulette System" of the basis system, the game participant indicates on the "Roulette" game table one or more numbers and / or other elements of the game table intended for betting, and sets a bet on the specified element by successive clicks / touches / pressing this element after having set a price for each click / touch / click. In the claimed variation "Fair Cards System" of the basis system, the graphical interface displays a matrix, each column (or each row) of which contains images of cards of the same suit ranked according to their increasing or decreasing nominal. The display also shows areas inside and on the periphery of this matrix that are used to place bets on card attributes or combinations of card attributes. The game participant indicates one or several cards and/or one or several areas in the matrix and/or its periphery and sets bets the same way as in the "Fair Roulette System" variation of the basis system - see above.

Despite the above-noted variety of options to enter elements of the gaming combination, the terminal's memory unit generates the gaming combination (in the text format specified by the game rules) with serial numbers or identifiers indicated by the game participant among elements of graphic interface.

In the preferred embodiment of the invention, the game participant enters her/his secret text by means of a real or virtual keyboard (displayed in the graphical interface) into the text input form on the terminal screen according to the secret text format specified by the game rules. Besides:
- In the claimed modification of the "Fair Slots System" variation of the basis system, the terminal displays an area with a graphic symbol depicted in it with Null identifier (for example, an image of the "lost-stylized" number 0) and an area with a graphic symbol depicted in it with #777 identifier (for example, "win-stylized" three sevens). The game participant moves any graphic symbol from the end face of the reel to the area of the graphic symbol with Null identifier and moves any other graphic element from the end face of the reel to the area of the graphic symbol with #777 identifier. As a result, the terminal swaps the graphic symbol with Null identifier and the graphic symbol with X identifier moved to its place, swaps the graphic symbol with #777 identifier and the graphic symbol with Y identifier moved to its place, and by means of its memory unit stores X and Y identifiers in special Null and #777 fields of the secret text respectively.
- In the claimed modification of the "Fair Roulette System" variation of the basis system, the game participant moves the game table cell with an arbitrary number X to the cell with the number 0. As a result, the terminal swaps X and 0 on the game table and by means of its memory unit stores number X in a special Zero field of the secret text;
- In the claimed modification of the "Fair Cards System" variation of the basis system, the terminal displays an area with an empty card with Joker identifier. The participant moves the image of any card to the empty card area on the gaming table. As a result, the terminal swaps the images of these cards at the game table and by means of its memory unit stores X identifier of the moved card in a special Joker field of the secret text.

Using the built-in encryption unit (13), the terminal encrypts the secret code, thus generating an open code out of it, and stores the secret and the open codes in the terminal memory. In the preferred embodiment of the invention, the encryption process is performed using an irreversible MD5 type algorithm (see Bruce Schneier, Applied Cryptography. John Wiley & Sons, 1996).

Having generated the open code as a result of encryption, the terminal sends the open code via the communication network to the server in a message with request for code uniqueness verification. The server input-output processor receives the message and transmits it to the query processor. The query processor recognizes the received message as the request for code uniqueness verification, extracts the open code from the message and sends it to the memory unit.

The memory unit is looking for an open code identical to the received open code using a list of stored pairs of open and secret codes previously used in the game. In case of a positive search result (the identical code is found), the query processor sends a code non-uniqueness message to the terminal through the server's input-output processor via the communication network. In case the identical code is not found the query processor sends a message about the code uniqueness to the terminal.

Having received the message with the result of the code uniqueness verification from the server, the terminal displays this message to the game participant and in case the code is unique, it offers to play with this open code. Otherwise it offers to change the secret code.

Having decided to change the secret code, the game participant changes the gaming combination and/or the secret text in the terminal. The terminal encrypts the modified secret code by means of the encryption unit and sends the new open code to the server in the message with request for code uniqueness verification.

Having decided to play with this open code, the game participant sets the price of the game in the terminal (in the "Fair Roulette System" and "Fair Cards System" variations of the basis system, the terminal calculates the game cost as the sum of the bet values of the gaming combination - see above) and taps a Play button. On the Play command, the terminal stores the pair {secret code, open code} along with the code uniqueness flag (flag = 1 when the open code is unique, flag = 0 when the open code is not unique), generates a message with game participation request including game participant's identification data, the game cost, the open code, and sends this message via the communication network to the server.

The input-output processor of the server receives the message sent from the terminal via the network and transmits it to the query processor, which recognizes the received message as the game participation request, fixes its receipt time by timer and transmits this time data, game participant's identification data, the game cost, the open code to the server's memory unit.

The memory unit identifies the game participant's account using the identification data, compares the game cost with the balance of the game participant's account, and if there is a shortage of funds to pay for the game, sends a message about it to the game participant's terminal through the query processor and the input-output processor via communication network. Otherwise, the memory unit updates the fund balance of the game participant's account by subtracting the game cost, requests and receives a winning combination of symbols from the combination generator.

In the claimed basis system, the variations of the basis system for playing games on guessing an integer n-digit number, games like "M out of N" and "Fair Game", as well as in variations "Fair Roulette System" and "Fair Cards System" of the basis system, the combination generator generates the winning combination by randomly selecting elements from the game set. In the claimed variation "Fair Slots System" of the basis system, the combination generator simulates the rotation and stopping of all L reels of a virtual slot machine, stores identifiers of graphic symbols in the LxM matrix that are located on its screen on M adjacent end faces of each L reels as a result of stopping the slot machine according to the rules of "Slots" game, determines in this matrix N winning lines and generates a set of N winning combinations, each of which contains an ordered set of L identifiers located on the corresponding winning line.

Having generated a winning combination (a set of winning combinations), the server, using a memory unit, creates and assigns a unique game identifier to this game participation request, creates and stores a primary game record in the game participant's account, which record includes:
- the unique game identifier;
- the receipt time of the game participation request;
- the game cost;
- the balance of game funds;
- the open code;
- the winning combination (set of the winning combinations).

Then the query processor generates and, via an input-output processor, transmits to the terminal via the communication network a game message which contains the primary game record.

Having received the game message, the terminal displays the winning combination (set of the winning combinations) on the screen along with the gaming combination and, using the winning logic unit, determines the current game result- winning or not winning the prize according to the prize-winning rules - by comparing the (each) winning combination with the gaming combination in the secret code stored in the terminal.

In the claimed modification of the "Fair Slots System" variation of the basis system, the terminal winning logic unit counts the Null and #777 identifiers in the LxM identifiers matrix as X and Y identifiers contained in the Null and #777 fields of the secret text, respectively, counts X and Y identifiers in LxM -matrix of identifiers as the Null and #777 identifiers, if X and Y are contained in the Null and # 777 fields of the secret text, respectively. In the claimed modification of the "Fair Roulette System" variation of the basis system, the terminal winning logic unit counts the winning number 0 as the number X contained in the Zero field of the secret text; counts the winning number X as the number 0 if X is contained in the Zero field of the secret text. In the claimed modification of the "Fair Cards System" variation of the basis system, the terminal winning logic unit counts the Joker identifier in the winning combination as the Y identifier contained in the Joker field of the secret text; counts Y identifier in the winning combination as the Joker identifier, if Y is contained in the Joker field of the secret text.

Based on the result of comparison of the gaming and winning combinations, the winning logic unit determines the current game result - wining or not winning the prize - according to the prize table or formula; the terminal displays information about the prize won (absence of prize means the null prize) and enters it into the primary game record, thus forming the current game record, stores the current game record in its memory unit and in case the prize is won offers the game participant to execute the "Take the Prize" command by tapping the corresponding button.

On the "Take the Prize" command, the terminal generates and sends a prize request message containing the participant's identification data, the unique game identifier, the secret code and the code uniqueness flag, via the communication network to the server. The server input-output processor receives this message and transmits it to the query processor. The query processor recognizes the prize request in the received message, extracts the data included in the message and transmits the secret code to the encryption unit, while transmitting the participant's identification data and the game identifier to the memory unit. The encryption unit encrypts the secret code and transmits the encryption result to the comparison unit. The memory unit identifies the game primary record in the game participant's account using the game identifier and the participant's identification data, then it extracts the open code and transfers it to the comparison unit.

The comparison unit compares the secret code encryption result received from the encryption unit with the open code received from the memory unit and, in case they are non-identical, transmits an error sign to the query processor. The query processor generates and sends to the terminal via the input-output processor a message about an error in the open code.

Otherwise, the query processor extracts the gaming combination from the secret code and transmits it to the winning logic unit. The server memory unit extracts the winning combination from the primary game record and transmits it to the winning logic unit. The winning logic unit compares the gaming combination with the winning combination according to the prize-winning rules, determines the final game result - winning or not winning the prize - and transmits the final game result to the server's memory unit.

In the claimed modification of the "Fair Slots System" variation of the basis system, the query processor extracts identifiers X and Y from the Null and #777 fields of the secret text in the prize request and transmits them to the server's winning logic unit, which unit counts the Null and #777 identifiers in the winning combination as the X and Y identifiers, while counting the X and Y identifiers in the winning combination as the Null and #777 identifiers, respectively. In the claimed modification of the "Fair Roulette System" variation of the basis system, the query processor extracts number X from the Zero field of the secret text in the prize request and transmits it to the server's winning logic unit, which unit counts the winning number 0 as number X, while counting the winning number X as number 0. In the claimed modification of the "Fair Cards System" variation of the basis system, the query processor extracts Y identifier from the Joker field of the secret text in the prize request and transmits it to the server's winning logic unit, which unit counts the Joker identifier in the winning combination as Y identifier, while counting the Y identifier in the winning combination as the Joker identifier.

The memory unit updates the fund balance in the game participant's account by adding the won prize, forms and stores in the game participant's account a final game record, which includes:
- the unique game identifier;
- the receipt time of the game participation request;
- the game cost;
- the balance of game funds;
- the open code;
- the open code uniqueness flag;
- the winning combination;
- the secret code comprising of the gaming combination and the secret text;
- the result of comparing the gaming and winning combinations;
- the final game result and the prize won, including the null prize.

In case of non-zero code uniqueness flag, the memory unit adds the pair of {secret code, open code} to the list of known codes. The memory unit transmits the final game record to the query processor, which includes it in the response message to the prize request and transmits this message via the input-output processor and the communication network to the terminal. The terminal stores the final game record and displays it to the game participant.

Hereinafter the described embodiment of the invention is called the basis embodiment of the invention.

In the claimed modifications "Multisystem with one winning combination" and "Multigame with one winning combination" the basis embodiment of the invention is modified for cases of prize drawing among several game participants. Here, during a time period set by the server for collecting game participation requests, each game participant generates and stores a pair of codes {secret code, open code} in her/his terminal, performs the open code uniqueness verification by means of the server and transmits to the server via the communication network at least one game participation request according to the basis embodiment of the invention. Upon receiving a game participation request, the server deducts the game cost payment from the game participant's account, generates and assigns a unique game identifier to this request, generates and stores in the game participant's account in the memory unit a game participation confirmation, which confirmation includes:
- the unique game identifier;
- the receipt time of the game participation request;
- the game cost;
- the balance of game funds;
- the open code.

The server, via the communication network, transmits this confirmation to the game participant's terminal and adds the game identifier and the participant's identification data to the general game record, generated and stored in the memory unit. The terminal displays the game participation confirmation to the game participant and stores it in the memory unit of the terminal.

When the period of collecting game participation requests is expired, the server generates a winning combination by means of the combination generator and publishes the winning combination on the web site. According to the general game record, the server adds the winning combination to the game participation confirmation stored in each game participant's account, thus forming the primary game record like the primary game record in the basis embodiment of the invention. Then the server transmits the winning combination to game participants' terminals via the communication network. Each game participant's terminal adds the winning combination to the game participation confirmation stored in memory, thus forming the current game record like the current game record in the basis embodiment of the invention. Further, during the time period for requesting prizes set by the server, the game participants, the terminals and the server function and interact in the process of checking the winnings and requesting prizes according to the basis embodiment of the invention. By that, the server upon receiving a prize request, using the memory unit looks for the game identifier from the prize request in the general game record. If the game identifier is not found, the server sends an error message to the terminal. If the game identifier is found, the server reads the game participant's identification data from the general game record corresponding to the found game identifier, searches for the primary game record by the game identifier in the participant's account and then operates according to the basis embodiment of the invention.

In the claimed modifications "Iterative Mono System" and "Iterative Mono Game", the basis embodiment of the invention is modified for cases when a game participant uses the same and / or different secret codes in an iterative process of sequential participation in the game.

Here, at each iteration, just as in the basis embodiment of the invention, the game participant generates and stores a pair of codes {secret code, open code} in the terminal, checks the open code uniqueness on the server and transmits the game participation request from the terminal to the server. The server processes each game participation request similarly to the basis embodiment of the invention, i.e. debits the game participant's account for the game cost, creates the game identifier, generates the winning combination, generates and stores the primary game record in the game participant's account, generates and transmits the game message with the primary game record to the terminal. The terminal processes each game message received from the server similarly to the basis embodiment of the invention, generates and stores in the memory unit the corresponding current game record. Thus, a sequence of primary game records is generated in the server memory unit, a sequence of current game records is generated in the terminal memory unit. By that, at each iteration, the terminal generates, accumulates in its memory and displays to the game participant the data on the total game costs and prizes won; in case a prize is won, the terminal suggests the game participant to take the prize.

Upon the "Take the Prize" command, when N game participation requests (N>1) are sent to the server and N winning combinations are received in response, the terminal generates and sends a prize request message to the server. This message contains the participant's identification data, N secret codes and N code uniqueness flags. The server performs N cycles of the prize request processing in the framework of the iterative process, performing the same operations at each iteration as in the basis embodiment of the invention. In particular, by means of the query processor, the server extracts each secret code from the prize request, encrypts the secret code and checks the identity of the encryption result and the corresponding open code stored in the primary game record of the game participant. In case the result of the check is negative, it adds an error sign into the corresponding final game record and proceeds to the next iteration. If the check result is positive, it extracts the gaming combination from the secret code, compares it with the corresponding winning combination from the primary game record according to the prize-winning rules, credits a prize won (including the null prize) to participant's account, generates a corresponding final game record for this primary game record. Like in the basis embodiment of the invention, at each iteration with the non-zero code uniqueness flag, the query processor adds the corresponding pair of {secret code, open code} to the list of known codes in the memory unit. Having completed the prize request processing, the server generates the total game result, which includes the total of game costs and the value of prizes won. Using the memory unit and the input-output processor the server generates a message about the final game results and prizes won and sends it to the game participant's terminal. This message includes a list of N final game records and the total game result. The terminal stores and displays the list of N final game records and the total game result.

In the claimed variations of the "Iterative Mono System" and "Iterative Mono Game" modifications of the basis embodiment of the invention, the terminal at each iteration, starting from the second iteration, generates the secret code by attaching the gaming combination to the previous secret code. As a result of encrypting N different secret codes generated in this way, a sequence of N non-repeating open codes is generated even in case the participant uses the same gaming combination at different iterations. Moreover, in case of encryption through MD5 algorithm and in case the length of the secret text of at least 7 text characters (including punctuation and special characters to the alphabet), it is enough to check the uniqueness only of the first open code, since in case it is unique, the probability of non-uniqueness of any subsequent open code is extremely small.

In the claimed modification "Game system via SMS/USSD" of the basis system, the basis embodiment of the invention is extended by using SMS or USSD message exchange channels in cellular networks (not shown in FIG. 1). Here, a computer server with a website and an SMS or USSD gateway extension of the input-output processor (4) is used as the server (3), while units (5) - (12) are implemented and operate according to the basis embodiment, by that a smartphone application expanded by the functions of transmitting, receiving and storing SMS and/or USSD messages is used as the terminal (1). The difference between the functionality of this type of the system and the functionality of the basis system is that the smartphone application disconnects the smartphone from the Internet for a period from entering the secret code to transmitting the prize request to the server and transmits the request for code uniqueness verification and the game participation request to the server and receives server responses via SMS/USSD channels of a cellular communication network. This type of embodiment of the invention provides the game participant with additional confidence that her/his secret code is not accessible to the server or to any third party during the game, since the processes of generating secret and open codes and comparing the game and winning combinations is performed by the terminal in offline mode, i.e. without being connected to the server via the Internet.

In the claimed modifications of the basis system and method with ads in the game, the basis embodiment of the invention is modified for a case when payment for participation in the game is treated as the time spent by the game participant for viewing ads. Here, the unit of payment means is an advertisement point equivalent to a few seconds of advertising time. The payment unit (8) serves to carry out operations on the game participant account in advertisement points - issuing points, paying the game cost, crediting the won points, exchanging the won points for prizes. The basis version of the system is supplemented in this case with an advertisement unit (not shown in FIG. 1) interconnected with the query processor, the timer and the memory unit. The advertisement unit is intended for storing and issuing files with ads to the query processor, by that the format and playback duration of each file to be displayed in the terminal is determined by the game cost in advertisement points. For example, at the game cost of 1 point, the terminal displays the ad within 5 seconds, at the game cost of 2 points - 10 seconds, at the game cost of 3 points - 15 seconds, etc. The advertising file may contain text, graphics and/or video commercial.

Prior to the start of the game, the game participant, by means of the payment unit, receives on her/his account advertisement points according to the selected game cost, these points serve as the game credit. Then, like in the basis embodiment of the invention, the participant generates a message with the game participation request and game cost and sends it from the terminal to the server via the communication network. Upon receiving the game participation request, the query processor transmits the game cost to the advertisement unit and receives in response an advertisement file of the corresponding duration and sends this file through the input-output processor to the game participant's terminal via the network. Having received the advertisement file, the terminal blocks all the participant's commands for the advertisement period and displays the advertisement file. Then the terminal transmits a signal about completing the ad demonstration to the server. Having received this signal, the server debits the game participant's account with the game cost and processes the previously received game participation request and a possible further prize request (in advertisement points) like in the basis embodiment of the invention.

### INDUSTRIAL APPLICABILITY

Examples below demonstrate some cases of applicability of the claimed game system, which though are not considered to cover all the possible usages.

### Example 1. Promotional Lottery in Retail

In retail, in the framework of the lotteries run for promotional purposes, the organizer distributes unique alphanumeric codes placed on flyers, packaging, or paper and / or electronic payment receipts among customers of a certain product or service. Hereinafter these codes are called primary codes. Customers register primary codes on the lottery website or via SMS. The lottery organizer selects several winning codes from the primary codes and grants valuable prizes to holders of the winning codes. In this kind of lottery, the process of registering primary codes by product buyers clearly links the primary code with the buyer's identifier in the lottery (usually a cell phone number or email), which results in restraining the growth of customer confidence in fairness of the prize draw. This problem is solved by running a similar lottery in a combination of the claimed "Multisystem with One Winning Combination" and "Game system via SMS/USSD" modifications of the basis system, by that the primary codes are used as the gaming combinations, while the winning codes are used as the winning combinations.

### Example 2. Games in Customer Loyalty Programs

In the framework of the customer loyalty program, registered customers exchange points accumulated when buying products for bonuses - products, prizes from product catalogues, tickets for participation in prize draws. Using the claimed game system in the above options with bonus points as game payment means and with the appropriate setting of the ratios between the game cost and the prizes (in bonus points) allows:
- the organizer of the loyalty program to deduce points from circulation due to their redistribution in the game in the set statistical proportions between the customers and the organizer, which provides the organizer with savings on bonuses
- loyalty program customers to win significant amounts of points, while risking small amounts of points, which encourages customers to make new purchases of products for real money and get new bonus points.

### Example 3. Advertising Games in Product Placement Marketing Strategy

A typical example of the Product Placement marketing strategy is games among real and potential consumers of products, during which consumers pay attention to product advertising ads placed in the game. Using the claimed modifications of the basis system and method with ads in the game allows consumers:
- to take part in probability games without risk of monetary losses and with the personal control over the situation in the game;
- to regulate the amount of advertisement viewed during the game by choosing the initial game credit, the game cost and the number of game cycles;
- to use the points won to participate in the game without showing ads or to exchange for real prizes in a prize catalogue.

In combination with the claimed "Iterative Mono System" modification of the basis system, the game organizer has an opportunity to display the game participant different ads of the product being promoted. As in Example 1, sellers can distribute primary codes among product buyers, so that the code holders can play without advertisement.

### Example 4. Draw and Instant Lotteries

Organization and running of draw and instant lotteries in communication and data transmission networks using the claimed game system in its "Multisystem with one Winning Combination" and "Iterative Mono System" modifications (respectively) in a possible combination with the claimed "Game system by SMS/USSD" modification provides control over the objectivity and impartiality of the lottery operator at a technological level, thus increasing the degree of confidence of the lottery participants in the process of drawing prizes and expands the number of participants. The claimed system modifications can be used both independently and in addition to traditional lottery systems with electronic betting.

### Example 5. Online Casino

Due to inability to track gaming processes in online games directly, many probability games lovers are suspicious of online casinos. Development of an online casino based on the claimed game system, its modifications and variations for remote participation in well-known games like "Lottery", "Slot Machine", "Roulette" and card games provides technological control of fairness and impartiality of the online casino operator, who in turn expands the audience and increases the degree of game participants confidence.

## Claims

1. A game system, comprising:
• a communication network providing message transmission with determination of the network addresses of the transmitter and the receiver;
• at least one terminal with a memory unit and means for entering and displaying data and receiving and transmitting messages, connected to the communication network and through which at least one game participant engages in a dialogue with the system, in particular, before joining the game, the participant enters and stores in the memory unit a gaming combination and a game cost, when entering the game, participant sends a game participation request containing the game cost and information on the gaming combination to the game system;
• a server connected to the network which:
- by means of consistently interconnected an input-output processor, a query processor and a memory unit provides information on the rules of the game, including information about a game set of symbols and formats for making gaming and winning combinations out of the game set, and determining the game result - winning or not winning a prize - based on a comparison of the gaming and winning combinations according to prize-winning rules, provides information on inquiries to the game system, payment means, game costs and prizes, registers users as game participants with unique identifiers;
- by means of the input-output processor, the query processor, the memory unit as well as a timer and a payment unit interconnected with the query processor and the memory unit receives and identifies the game participation request sent from the terminal, performs payment operations for taking part in the game, stores the game participation request in the memory unit, forms and transmits a message on payment for participation in the game to the terminal of the identified game participant;
- generates a winning combination from the game set of symbols by means of a combination generator interconnected with the query processor and the memory unit and stores the winning combination in the memory unit;
- by means of the input-output processor, transmits the winning combination via the communication network to the terminal, which determines a current game result using the winning logics unit, comparing the winning combination with the gaming combination according to the prize-winning rules stored in the terminal memory unit, displays the current game result, on game participant's command generates a prize request containing the gaming combination and sends it via communication network to the server;
- by means of the input-output processor, the query processor and the memory unit receives and identifies the prize request;
- by means of a comparison unit interconnected with the memory unit, compares the gaming combination contained in the prize request with information on the gaming combination stored in the memory unit as part of the game participation request of the identified game participant, in case of incompatibility of the compared data, sends an error message to the game participant's terminal, otherwise transfers the gaming combination to a winning logics unit interconnected with the query processor and the memory unit;
- by means of the winning logics unit determines the final game result, comparing the gaming combination with the winning one stored in the server memory unit according to the prize-winning rules, by means of the query processor and the input-output processor generates and sends a message on the final game result and the prize won or not won via the communication network to the game participant's terminal;
- when a prize is won, performs operations on paying out the prize to the game participant by means of the payment unit and the memory unit;
**characterized in that**:
a) the server and the terminal comprise encryption units interconnected with the memory units and performing identical data encryption processes, the server encryption unit is interconnected with the comparison unit;
b) before entering the game, the game participant enters a secret text into the terminal, the terminal generates a secret code with the gaming combination and the secret text, encrypts the secret code by means of its encryption unit thus receiving an open code, stores the secret and open codes in the memory unit and transmits the open code via the communication network to the server as a request for code uniqueness verification, the server by means of the query processor and the memory unit checks the open code for uniqueness in a list of secret and open codes pairs, in case of the identical open code in the list generates a message with a negative result of the code uniqueness verification and a proposal to change the secret code and sends the message to the terminal via the communication network through the query processor and the input-output processor, in case of absence of the identical open code in the list generates and sends to the terminal via the communication network a message with a positive result of the code uniqueness verification as well as a proposal to enter the game, the terminal displays the message received and stores the check result in the memory unit;
c) having received the proposal to change the secret code, the game participant enters a new gaming combination and /or a new secret text into the terminal, which generates a new secret code and encrypts it by means of the encryption unit, thus receiving an open code, stores the secret and open codes in the memory unit, sends the open code via communication network to the server as a part of the request for checking code uniqueness, receives and displays the server message with the result of the code check;
d) the terminal includes the open code in the game participation request as the information on the gaming combination;
e) the terminal includes the secret code and the result of the code uniqueness verification in the prize request;
f) the server by means of the query processor identifies the result of the code uniqueness verification and the secret code in the prize request, by means of the encryption unit encrypts the secret code, by means of the comparison unit compares the result of the secret code encryption with the open code stored in the server's memory unit in the game participation request of the identified game participant, transmits an error message to the terminal in case of mismatched compared data, otherwise by means of the query processor extracts the gaming combination from the secret code and transmits it to the winning logic unit, in case of the positive result of the code uniqueness verification stores the secret and open codes in the server memory unit in the list of secret and open codes pairs.

2. The game system of claim 1 **characterized in that**:
- the Internet is used as the communication network;
- as the server, a computer server is used, in which the input-output processor is implemented by a website, the query processor, the encryption unit, the payment unit, the combination generator, the winning logic unit and the comparison unit are implemented by means of software applications, the memory unit is implemented by means of computer memory and database management system;
- a personal computer or a mobile device is used as the terminal, the terminal's functionality is implemented by means of a web browser or software application.

3. The game system of claim 1 **characterized in that**:
- the Internet and SMS channels or USSD messaging channels in cellular networks are used as the communication network;
- the terminal functionality is implemented by means of a software application of a personal computer or mobile device connected to the Internet and SMS channels or USSD messaging channels in cellular networks;
- the server input-output processor contains an SMS gateway or USSD gateway;
- the software application disconnects the terminal from the Internet for the period from entering the secret code into the terminal to transmitting the prize request to the server;
- the terminal transmits to the server the request for code uniqueness verification and the game participation request and receives server responses to these requests via SMS channels or USSD messaging channels in cellular networks.

4. The game system of claim 1 **characterized in that**:
- during a specified time period for taking part in the game, participants send game participation requests from the terminals to the server via the communication network;
- at the end of the time period for taking part in the game, the server generates a winning combination by means of the combination generator, stores the winning combination in the memory unit, publishes the winning combination in the communication network and transfers the winning combination to the game participants' terminals;
- during a specified time period for issuing prizes, the game participants determine the current game results in the terminals, comparing by terminal winning logic units the published winning combination with the gaming combinations stored in terminal memory units according to the prize-winning rules, and send the prize requests from the terminals to the server.

5. The game system of claim 1 **characterized in that**:
- the game participant sends successive game participation requests, containing the same and/or different open codes, from the terminal to the server via the communication network;
- having received another game participation request (starting with the first one), the server generates another winning combination by means of the combination generator, stores it in the memory unit together with the respective game participation request and sends the winning combination to the participant's terminal through the input-output processor via the communication network;
- the terminal by means of the winning logic unit determines another current game result, comparing the another winning combination (starting with the first one) with the sent gaming combination stored in the terminal memory unit according to the prize-winning rules, forms, stores in the memory unit and displays a list of current game results and prizes won;
- on completing participation in the game after transmitting N game participation requests to the server, the participant sends to the server a prize request, in which the terminal includes N secret codes corresponding to the N open codes sent to the server in the N game participation requests;
- the server by means of the query processor sequentially extracts the secret codes from the prize request, starting with the first secret code, by means of the encryption unit encrypts each secret code, by means of the comparison unit compares the result of the encryption with the open code stored in the memory unit in the corresponding game participation request, by means of the memory unit enters an error to a list of final game results and prizes won in case of unidentical compared data, but in case of identical compared data by means of the query processor extracts the gaming combination from the secret code, by means of the winning logic unit determines the final game result comparing this gaming combination according to the prize-winning rules with the corresponding winning combination stored in the memory unit and sent to the game participant's terminal, by means of the memory unit enters the final game result into the list of final game results and prizes won, upon completion of the N secret codes processing, sends a message with the list of final game results and prizes won to the game participant's terminal through input-output processor, by means of the payment unit performs prize issuing operations, by means of the memory unit updates the list of secret and open codes pairs.

6. The game system of claim 5 **characterized in that** having saved the first secret code in the memory unit, the terminal generates the next secret code by joining the next gaming combination to the previous secret code.

7. The game system of claim 1 **characterized in that**:
- the game set consists of all n-bit integers from the interval [0...0; 10ⁿ-1];
- the terminal provides input of any n-bit integer from the interval [0...0; 10ⁿ-1] as the gaming combination;
- the combination generator generates the winning combination by randomly selecting an n-bit integer from the interval [0...0; 10ⁿ-1];
- the winning logic unit determines the prize winning when the digits in the corresponding bits of the gaming and winning combinations coincide or when the difference between the gaming and winning combinations does not exceed a specified limit.

8. The game system of claim 1 **characterized in that**:
- the game set consists of all integers from the interval [1; N];
- the terminal provides input of the gaming combination of M integers without repetition selected by the game participant from the interval [1; N];
- the combination generator generates the winning combination by randomly selecting M numbers without repetition from the interval [1; N];
- the winning logic unit determines the prize by the rules of the well-known lottery "M out of N" or by the rules of the well-known "Fair Game" lottery ticket.

9. The game system of claim 1 **characterized in that**:
- the game set consists of J elements - graphic symbols with identifiers printed on K end faces of each of the L reels of the virtual slot machine, which the terminal displays with an LxM matrix of L columns with graphic symbols placed on M adjacent faces of each reel (J>2, K>=J, 2<L<7, 0<M<6);
- the game participant indicates one graphic symbol on each reel in the terminal, the terminal by means of its memory unit converts these indications into the gaming combination of L identifiers of the elements of the game set;
- by means of the combination generator, the server models the rotation and stopping of the reels and puts the identifiers of elements on the M adjacent faces of each of the L stopped reels into the LxM matrix, according to the rules of the well-known game "Slots" determines the winning combinations of identifiers in the matrix, stores the winning combinations in the memory unit and using the input-output processor transmits the LxM matrix of identifiers and the winning combinations to the terminal via the communication network;
- the terminal displays the matrix of identifiers and the winning combinations with appropriate graphic symbols, by means of the winning logic unit determines the current game result, comparing the gaming combination stored in the terminal memory unit with each of the winning combinations according to the rules of the well-known game "Slots";
- by means of the winning logic unit the server determines a final game result by comparing the gaming combination with each of the winning combinations stored in the server's memory unit according to the prize-winning rules of the well-known game "Slots".

10. The game system of claim 9 **characterized in that**:
- the game set contains an element with Null identifier, which presence in the identifier matrix cancels the winnings, and an element with #777 identifier, which presence in the identifier matrix is treated according to special prize-winning rules, the terminal provides input of any element of the game set as the value of Null identifier and any element of the game set as the value of #777 identifier into the secret text;
- the game participant indicates two elements in the game set, whose X and Y identifiers the terminal includes into the secret text as the values of Null and #777 identifiers respectively;
- the terminal memory unit transmits X and Y values of Null and # 777 identifiers to the terminal's winning logic unit;
- the query processor extracts X and Y values of Null and #777 identifiers from the prize request and transmits these values to the server winning logic unit;
- terminal and server winning logic units treat X identifier in the matrix of identifiers as Null identifier, treat Null identifier as X identifier, treat Y identifier as # 777 identifier, treat # 777 identifier as Y identifier.

11. The game system of claim 1 **characterized in that**:
- the game set consists of 37 numbers - all integers from the interval [0; 36];
- before the game starts, the terminal displays the game table of the well-known "Roulette" game containing all numbers from 0 to 36 inclusive, the game participant indicates in the terminal some elements of the game table intended for betting and assigns bet values to these elements, the terminal converts these values into the gaming combination in the form of the first ordered set of values, each of which is equal to the bet value for each number, including null bets, and the second ordered set of values, each of which is equal to the bet value for every other element of the game table, intended for betting, including null bets;
- the terminal generates and displays the sum of the values of the gaming combination and includes it in the game participation request as the game cost;
- the combination generator generates the winning combination by randomly selecting an integer from the interval [0; 36];
- the winning logic unit determines the game result according to the prize-winning rules of the well-known "Roulette" game.

12. The game system of claim 11 **characterized in that**:
- the terminal provides input of any integer from the interval [0; 36] as a value of Zero identifier into the secret text;
- the game participant chooses from the game set a number X and includes it into the secret text as the value X of Zero identifier;
- the terminal memory unit transmits the value X of Zero identifier to the terminal winning logic unit;
- the query processor extracts the value X of Zero identifier from the prize request and transmits the value X to the server winning logic unit;
- the terminal and server winning logic units process the winning combination X as number 0 in the well-known game "Roulette", process the winning combination 0 as number X in the well-known game "Roulette".

13. The game system of claim 1 **characterized in that**:
- the game set consists of identifiers of N playing cards, each of which correlates with identifiers of card attributes, denoting the denomination, number or letter, suit and colour in terminal and server memory units and winning logic units;
- before the start of the game, the terminal displays N cards and the attributes and combinations of card attributes intended for betting, the game participant indicates some cards and/or card attributes and/or combinations of card attributes and assigns bet values to indicated cards and/or card attributes and/or combinations of card attributes, the terminal memory unit converts these indications and bet values into the gaming combination that consists of identifiers of the specified cards and/or identifiers of the specified card attributes and/or identifiers of the specified combinations of card attributes in pairs with given bet values placed on these cards and/or attributes and/or combinations of card attributes;
- the terminal calculates and includes the sum of the bet values of the gaming combination in the game participation request as the game cost;
- the combination generator generates the winning combination by randomly selecting an X identifier from the game set;
- the terminal and server winning logic units determine the prize when identifier X, or at least one attribute identifier correlated with identifier X, or at least one combination of attribute identifiers correlated with identifier X matches at least with one identifier or one identifier combination in the gaming combination.

14. The game system of claim 13 **characterized in that**:
- the game set contains N identifiers of playing cards and an identifier Joker of an empty card to which no attribute corresponds;
- the terminal provides input of any identifier from the game set into the secret text as the value of identifier Joker;
- the game participant includes an identifier Y from the game set in the secret text as the value Y of identifier Joker;
- the terminal memory unit transmits the value Y of identifier Joker to the terminal winning logic unit;
- the query processor extracts the value Y of identifier Joker from the prize request and transmits it to the server winning logic unit;
- the terminal and server winning logic units recognize the Y winning combination as the Joker winning combination, recognize the Joker winning combination as the Y winning combination.

15. The game system of claim 1 **characterized in that** the server contains an advertisement unit interconnected with the timer, the query processor and the payment unit, said advertisement unit in response to the game participation request sends an advertisement file through the query processor and the input-output processor to the game participant's terminal, the time of displaying the advertisement file is determined by the game cost, the terminal displays the advertisement file and, at the end of the time of displaying the advertisement file, receives the winning combination from the server.

16. A game method, which involves:
- specifying the game set of symbols and formats for generating gaming and winning combinations out of them;
- specifying the means of payment, game costs and prizes, options for determining the game result (winning or not winning a prize) by comparing the gaming and winning combinations according to prize-winning rules;
- providing access to information on the rules of the game, means of payment, prices for participation in the game and prizes;
- registration of a game participant with assignment of a unique identifier;
- generating a gaming combination by the game participant and transmitting via communication channels a message with a game participation request, containing the game participant's identifier, the game cost and information on the gaming combination;
- identifying the game participation request, performing game participation payment operations, transmitting a message on game participation payment to the game participant, saving the game participation request in the memory;
- generating a winning combination and transmitting a message with the winning combination to the game participant via communication channels;
- determining a current game result by the game participant by comparing the gaming and winning combinations according to the prize-winning rules;
- transmitting by the game participant a message with a prize request containing the game participant's identifier and the gaming combination via communication channels;
- identifying the prize request, comparing the gaming combination from the prize request with information about the gaming combination stored in the memory in the game participation request of the identified game participant, transmitting an error message via communication channels to the game participant in case the compared data does not match, otherwise determining the final game result by comparing the gaming and winning combinations according to the prize-winning rules, transmitting a message about the final game result, including information about winning or not winning a prize to the game participant via communication channels, performing operations to provide the game participant with the prize won;
**characterized in that**:
- in the game rules, a format of secret text, a format of secret code and a method of data encryption are set;
- before entering the game, the game participant sets a secret text, generates a secret code consisting of the gaming combination and the secret text, transforms the secret code into an open code by using the data encryption, stores the secret and open codes in memory, transmits the open code via communication channels in a message with a code uniqueness verification request;
- the open code is verified for uniqueness using a list of secret and open code pairs, if there is an identical open code in the list, then a message with negative result of the code uniqueness verification proposing to change the secret code is transmitted to the game participant, if there is no identical open code in the list, then a message with positive result of the code uniqueness verification proposing to enter the game is transmitted to the game participant;
- having decided to change the secret code, the game participant changes the gaming combination and/or the secret text, converts the respectively changed secret code into the open code by using the data encryption, stores the secret and open codes in memory, transmits the open code via communication channels in the message with the code uniqueness verification request and receives in response the message with the result of code uniqueness verification;
- when entering the game, the game participant transmits via communication channels a message with the game participation request, that includes the open code as the information about the gaming combination;
- when completing the game, the game participant transmits via communication channels a message with the prize request which includes the secret code and the result of the code uniqueness verification;
- the secret code from the identified prize request is encrypted, the result of the encryption is compared with the open code from the game participation request of the identified game participant, in case of mismatch of the compared data, an error message is transmitted to the game participant, otherwise the game result is determined by comparing the gaming combination in the secret code with the winning combination according to the prize-winning rules, in case of the positive result of the code uniqueness verification the secret and open codes are stored in the list of secret and open code pairs.

17. The game method of claim 16 **characterized in that**:
- during a specified time period for participation in the game, the game participants transmit via communication channels messages with game participation requests;
- at the end of the specified time period for participation in the game, winning combination is formed and published;
- during a specified time period for issuing the prizes, the game participants determine their current game results, comparing the published winning combination with their own gaming combinations according to the prize-winning rules, and send messages with prize requests via communication channels.

18. The game method of claim 16 **characterized in that**:
- the game participant transmits via communication channels successive game participation requests, containing the same and/or different open codes;
- in response to another game participation request, another winning combination is formed, the winning combination is stored in memory along with the game participation request and its serial number in the game, then the winning combination is transmitted to the game participant via communication channels;
- the game participant sequentially determines the current game result, comparing the current winning combination with the current gaming combination according to the prize-winning rules, and forms a list of current game results and prizes won;
- on completing the game after N game participation requests, the game participant transmits via communication channels a prize request message along with a sequence of N secret codes corresponding to N open codes sent in N game participation requests;
- each secret code is extracted from the prize request starting with the first secret code, this secret code is encrypted, the result of encryption is compared with the open code that had earlier been stored in corresponding game participation request, in case the compared data are not identical, an error is recorded into a list of final game results and prizes won, in case of identical data, the gaming combination is extracted from the secret code, the game result is determined according to the prize-winning rules by comparing this gaming combination with the corresponding winning combination stored in the memory and transmitted to the game participant, this game result is added to the list of final game results and prizes won, after N secret codes have been processed in this way, a message is transmitted via communication channels to the game participant with the list of final game results and prizes won, then the prizes won are issued.

19. The game method of claim 18 **characterized in that** keeping the first secret code in memory, the game participant generates each next secret code by joining the next gaming combination to the previous secret code.

20. The game method of claim 16 **characterized in that**:
- the game set contains all n-bit integers from the interval [0...0; 10ⁿ-1];
- the game participant chooses an n-bit number from the interval [0...0; 10ⁿ-1] as a gaming combination;
- the winning combination is generated by random selection of an n-bit number from the interval [0...0; 10ⁿ-1];
- the prize-winning rules determine the winnings when the digits in the corresponding bits of the gaming and the winning combinations coincide or when the difference between the gaming and the winning combinations does not exceed a specified limit.

21. The game method of claim 16 **characterized in that**:
- the game set contains all integers from the interval [1; N];
- the game participant chooses M integers without repetitions from the interval [1; N] as a gaming combination;
- the winning combination is generated by randomly choosing M integers without repetitions from the interval [1; N];
- the prize-winning rules are determined by the rules of the well-known lottery "M out of N" or by the rules of the well-known "Fair Game" lottery ticket.

22. The game method of claim 16 **characterized in that**:
- the game set consists of J elements - graphic symbols with identifiers carried on K end faces of each of L reels of the virtual slot machine, which displays an LxM matrix with L columns with graphic symbols located on M adjacent faces of each reel (J>2, K>=J, 2<L<7, 0<M<6);
- the prize-winning rules are determined by the rules of the well-known "Slots" game;
- the game participant makes an ordered set of L elements of the game set and generates the gaming combination from the identifiers of these elements;
- on receiving the game participation request, the rotation and stopping of the slot machine reels is modelled, the identifiers of the elements on the M adjacent faces of each of the L stopped reels are recorded into the LxM matrix with L columns and M rows, the winning combinations of identifiers in this matrix are determined by the rules of the "Slots" game, the winning combinations are stored in memory, the LxM matrix of identifiers along with the winning combinations are transmitted via communication channels to the game participant;
- the game participant determines the current game result according to the prize-winning rules by comparing the gaming combination with each of the winning combinations received via communication channels;
- the final game result is determined by comparing the gaming combination with each of the winning combinations stored in memory according to the prize-winning rules.

23. The game method of claim 22 **characterized in that**:
- the game set contains an element with Null identifier and an element with #777 identifier, presence of Null identifier in the identifier matrix cancels the winnings, presence of #777 identifier in the identifier matrix is treated according to special prize-winning rules;
- the secret text format contains input fields for values of Null and #777 identifiers;
- the game participant includes X and Y identifiers of arbitrary elements of the game set as the values of Null and #777 identifiers in the secret text;
- when determining the current and final results of the game, the presence of X identifier in the matrix of identifiers is treated as Null identifier, the presence of Null identifier is treated as X identifier, the presence of Y identifier is treated as #777 identifier, the presence of #777 identifier is treated as Y identifier.

24. The game method of claim 16 **characterized in that**:
- the game set consists of 37 numbers - integers from the interval [0; 36], located on the gaming table of the well-known "Roulette" game;
- the game participant forms the gaming combination as the first ordered set of values, each of which is equal to a bet value placed on each number on the "Roulette" game table, including null bets, and the second ordered set of values, each of which is equal to a bet value placed on each other element intended for betting on the "Roulette" game table, including null bets;
- the game participant calculates the sum of the values of the gaming combination as the price of the participation in the game and includes it in the game participation request;
- the winning combination is generated by random selection of an integer from the interval [0; 36];
- the game result is determined by prize-wining rules of the well-known "Roulette" game.

25. The game method of claim 24 **characterized in that**:
- the secret text format includes a value field for Zero identifier;
- the game participant chooses a number X from the game set and enters it into the value field for Zero identifier;
- when determining the game result, the winning combination X is treated as number 0 in the "Roulette" game, the winning combination 0 is treated as number X.

26. The game method of claim 16 **characterized in that**:
- the game set consists of N playing cards, each of which has an identifier and attributes of the card correlated with the identifier - nominal value, number or letter, suit, colour;
- the gaming combination consists of double fields, one field is designed for a card identifier, or a card attribute identifier, or a combination of card attribute identifiers, other field is designed for a bet placed on the card identifier, or the card attribute identifier, or the combination of card attribute identifiers respectively;
- the game participant sets the gaming combination as one or several card identifiers, and/or one or several card attribute identifiers, and/or one or several card attribute identifiers combinations with indications of bet values for these identifiers and/or identifier combinations;
- the game participant calculates the sum of bet values of the gaming combination as the game cost and includes it into the game participation request;
- the winning combination is generated by random selection of a card from the game set and setting its identifier X as the winning combination;
- the prize winning is determined by matching the X identifier, or at least one attribute identifier correlated with X identifier, or at least one combination of attribute identifiers correlated with X identifier, at least with an identifier or a combination of identifiers in the gaming combination.

27. The game method of claim 26 **characterized in that**:
- the game set contains an empty card with Joker identifier, which is not correlated with any attribute and treated as a winning combination by special prize-winning rules;
- the secret text format includes a value field for the empty card identifier;
- the game participant chooses a card from the game set and enters its identifier Y in the value field for the empty card identifier of the secret text;
- when choosing the empty card from the game set, the Joker identifier is assigned to it as the respective winning combination;
- when determining the game result, the Joker winning combination is replaced with Y, the Y winning combination is replaced with Joker.

28. The game method of claim 16 **characterized in that** the time of watching ads is used as means of payment for participation in the game, in response to the game participation request a file with ad is sent via communication channels and displayed to the game participant, the duration of advertisement is determined by the game cost, nominated in seconds of time for watching ads, the winning combination is transmitted to the participant via communication channels when the time of watching ad ends.
